# EUROPEAN PATENT SPECIFICATION

(11) **EP 1 470 341 B1**
(45) Date of publication and mention of the grant of the patent: **14.03.2007**
(21) Application number: 03735023.8
(22) Date of filing: 27.01.2003
(51) Int. Cl.: F16B 37/04, F16B 5/02

(54) **SCREW GROMMET**
SCHRAUBTÜLLE
RONDELLE A VIS

(30) Priority: 31.01.2002 JP 2002023735; 12.07.2002 US 194511
(43) Date of publication of application: 27.10.2004
(73) Proprietor: Newfrey LLC, Newark, Delaware 19711 (US)
(72) Inventor: KANIE, Hideki, c/o Pop Rivet Fastener K.K., Toyohashi-shi, Aichi-ken (JP); DENDO, Masashi, c/o Pop Rivet Fastener K.K., Toyohashi-shi, Aichi-ken (JP)
(74) Representative: Haar, Lucas Heinz Jörn
(86) International application number: PCT/US2003/002413
(87) International publication number: WO 2003/064865

(56) References cited:
- US-A- 895 769
- US-A- 3 999 583
- US-A- 4 674 931
- US-A- 4 677 714
- US-A- 5 106 225
- US-A- 5 540 528

## Description

### FIELD OF THE INVENTION

The present invention relates to a plastic screw grommet for connecting and securing an attached component such as a cover to a workpiece such as a car body by screwing in a tapping screw and, more specifically, to a screw grommet that maintains a high level of attachment force while reducing the fastening torque load on the legs of the shank when the tapping screw is screwed in.

### BACKGROUND OF THE INVENTION

A screw grommet, in which the grommet is equipped with a flange and a shank extending from the flange, in which the shank is hollow and inserted into an attachment hole in a workpiece, in which the shank has flexible legs extending towards the flange from the end of the shank and extending radially outward from the shank with the end towards the flange being the free end, in which a threaded through-hole is formed in the flange and shank for receiving a tapping screw, and in which screwing the tapping screw into the threaded through-hole prevents warping of the free end of the legs towards the inside radially are well known in the art. A specific example referred to in the preamble of claim 1 is disclosed in US-A-4 284 378 (Japanese Unexamined Patent Application Disclosure [Kokai] No. 55-14359), further examples are disclosed in Japanese Unexamined Utility Model Application Disclosure No. 62-200807, Registered Design No. 704108 (disclosed in 1987), and Kokai No. 5-187422. The screw grommets disclosed in these publications all have threaded sections in the ends of the shank legs for receiving a tapping screw and sections near the workpiece adjacent to the flange for avoiding the tapping screw. For this reason, the force applied by the legs to the work-piece is somewhat weak. A screw grommet was disclosed in Kokai No. 1-216109 that does not rotate with the tapping screw even when applied to a round attachment hole. In this screw grommet, the central section of the legs in the shank expand outward.

The legs expand outward strongly when the tapping screw is screwed into the free end of the legs to secure the screw grommet to the workpiece and keep it from rotating with the tapping screw.

Because the screw grommet disclosed in Kokai No. 1-216109 is attached strongly to the workpiece, it is ideal. However, when the tapping screw is screwed into the legs and strong fastening torque from the tapping screw is applied to the free end of the legs, strong torque is applied to the base of the legs (end of the shank), and the legs are twisted and damaged. Because the latest fastening tools are strong and compact, the tapping screw applies strong torque, and the probability of damage to the legs is great.

A one-piece plastic screw grommet for retention on the edge of an apertured panel is disclosed in US-A-3 999 583 comprising a tubular body and a flange radially extending from one end thereof, and a clip section extending from the flange and including a flexible tang having an aperture extending therethrough. The aperture of the tang is aligned with a threadable aperture extending through the tubular body and the flange to accommodate a screw for moving the tang and the flange in gripping relationship around the panel.

The purpose of the present invention is to provide a screw grommet in which the legs of the shank expand outward strongly to secure the grommet to the workpiece while preventing damage to the legs due to fastening torque from the tapping screw.

Another purpose of the present invention is to provide a screw grommet in which the legs of the shank expand outward strongly to bring the legs into contact with the workpiece and secure the workpiece even more firmly.

### SUMMARY OF THE INVENTION

The purposes of the present invention are achieved by providing a screw grommet comprising the features of claim 1. The grommet of the present invention is equipped with a flange and a shank extending from the flange, wherein the shank is hollow and inserted into an attachment hole in a workpiece, wherein the shank has flexible legs extending towards the flange from the end of the shank and extending radially outward from the shank with the end towards the flange being the free end, wherein a threaded through-hole is formed in the flange and shank for receiving a tapping screw, wherein screwing the tapping screw into the threaded through-hole prevents warping of the free end of the legs towards the inside radially, wherein the flange and the legs securely in contact with the edge of the attachment hole in the workpiece fix the grommet to the workpiece, wherein a threaded section is formed on the inside section of the free end of the legs for receiving the tapping screw and extending towards the inside so the diameter of the threaded through-hole becomes smaller than the outer diameter of the tapping screw, wherein a tube-shaped fastening torque bearing section extending opposite the shank is integrated with the flange, wherein a threaded through-hole is formed in the fastening torque bearing section with a diameter smaller than the outside diameter of the tapping screw for receiving the tapping screw, and wherein the fastening torque from screwing in the tapping screw is born by the fastening torque bearing section outside the threaded section of the legs.

Because the screw grommet has a threaded section on the inside of the free ends of the legs with a diameter greater than the outer diameter of the tapping screw, the free ends of the legs expand outward strongly and the screw grommet is secured to the workpiece firmly. Because a threaded through-hole with a diameter smaller than the tapping screw is formed in the fastening torque bearing section and the fastening torque from screwing in the tapping screw is born by the fastening torque bearing section outside the threaded section of the legs, strong fastening torque is not concentrated in the legs and the legs are less likely to be damaged. As a result, a fastening tool with high fastening torque can be used and the screw grommet can be used to quickly attach a component.

Ideally, the screw grommet should be designed so the legs are formed as pairs of anchor-shaped legs opposed to each other diametrically, the ends of the legs are connected to the main section of the shank and the legs are separated from the main section of the shank by a U-shaped groove, and ribs are formed extending axially towards the threaded through-hole on the inside of the main section of the shank separate from the legs for bearing some of the fastening torque when the tapping screw is screwed in. As a result, high fastening torque can be dispersed. The circumferential width of the shank in the U-shaped groove becomes smaller, and the twisting of the legs due to fastening torque when the tapping screw is screwed in can be prevented by contact with the main body of the shank. A locking shoulder is formed in the anchor-shaped legs to engage the edge of the hole in the workpiece, and the locking shoulder is not parallel but at a constant angle to the engaged surface of the workpiece. As a result, the workpieces of varying thicknesses can be secured firmly. Ideally, a holding clip with a U-shaped curve substantially parallel to the flange surface is integrated into the end of the fastening torque bearing section. This holding clip can be used to connect different components.

The present invention is also a screw grommet, in which the grommet is equipped with a flange and a shank extending from the flange, in which the shank is hollow and inserted into an attachment hole in a workpiece, in which the shank has flexible legs extending towards the flange from the end of the shank and extending radially outward from the shank with the end towards the flange being the free end, in which a threaded through-hole is formed in the flange and shank for receiving a tapping screw, in which screwing the tapping screw into the threaded through-hole prevents warping of the free end of the legs towards the inside radially, in which the flange and the legs securely in contact with the edge of the attachment hole in the workpiece fix the grommet to the workpiece, in which a threaded section is formed on the inside section of the free end of the legs for receiving the tapping screw and extending towards the inside so the diameter of the threaded through-hole becomes smaller than the outer diameter of the tapping screw, and in which the sections of the legs other than the threaded section are thin and extendable so as to draw the free end closer to the flange when the tapping screw is screwed in and fastened. As a result, the legs are raised towards the surface of the workpiece and more firmly secured.

### BRIEF DESCRIPTION OF THE DRAWINGS

Fig. 1 is a perspective view of the screw grommet in a working example of the present invention.

Fig. 2 is a frontal view of the screw grommet in Fig. 1.

Fig. 3 is a right-side lateral view of the screw grommet in Fig. 1.

Fig. 4 is a left-side lateral view of the screw grommet in Fig. 1.

Fig. 5 is a planar view of the screw grommet in Fig. 1.

Fig. 6 is a bottom view of the screw grommet in Fig. 1.

Fig. 7 is a partial cross-sectional view of the screw grommet in FIG 2 along line A.

Fig. 8 is a partial cross-sectional view of the screw grommet in FIG 3 along line B-B.

Fig. 9 is a cross-sectional view of the screw grommet in Fig. 3 along line C-C.

Fig. 10 is a cross-sectional view of two attached components connected to the workpiece using the screw grommet in Fig. 1.

Fig. 11 is a cross-sectional view used to explain the action of the locking shoulders on the legs of the screw grommet in Fig. 1.

Fig. 12 is a view of another screw grommet. (A) is a right-side cross-sectional view, and (B) is a left-side cross-sectional view.

Fig. 13 is a cross-sectional view before connecting an attached component to a workpiece using the screw grommet in Fig. 12.

Fig. 14 is a cross-sectional view after connecting an attached component to a workpiece using the screw grommet in Fig. 12.

### DETAILED DESCRIPTION OF THE PREFERRED EMBODIMENT

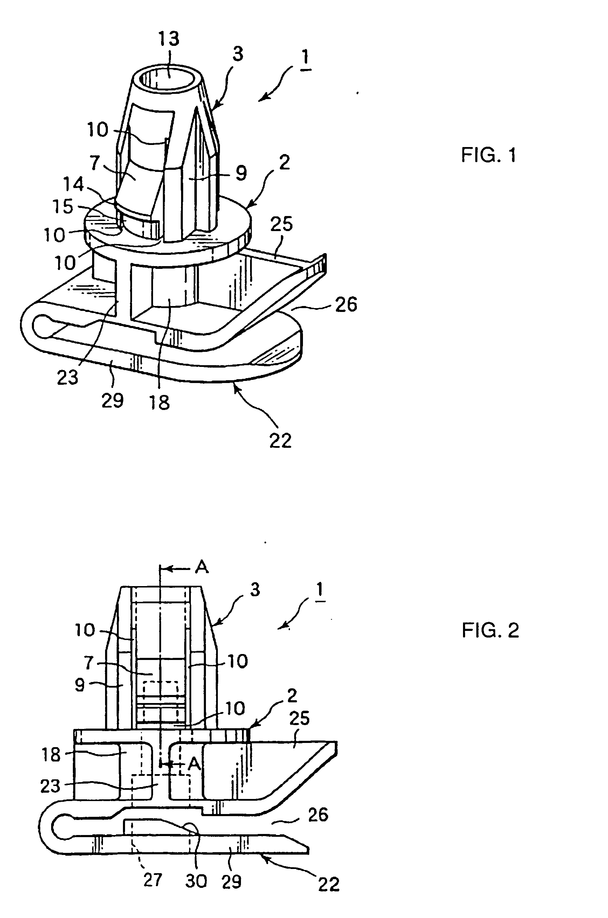

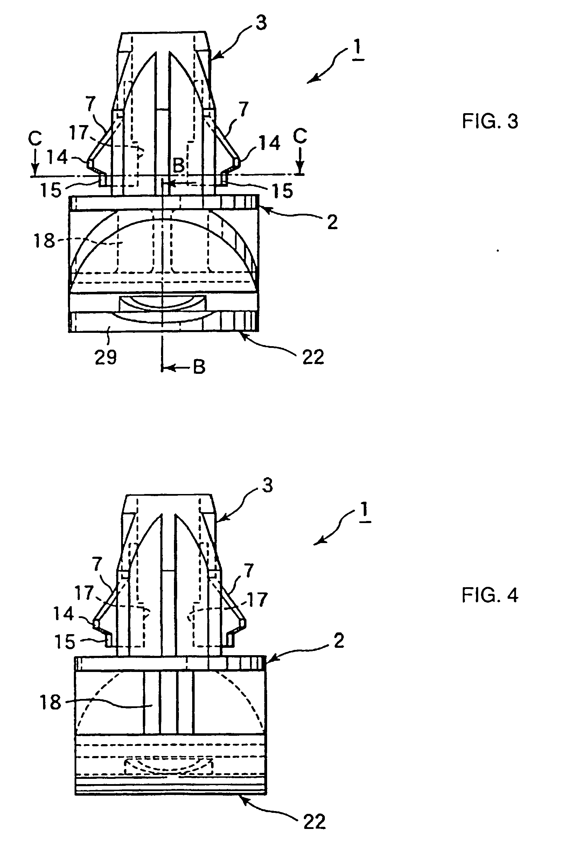

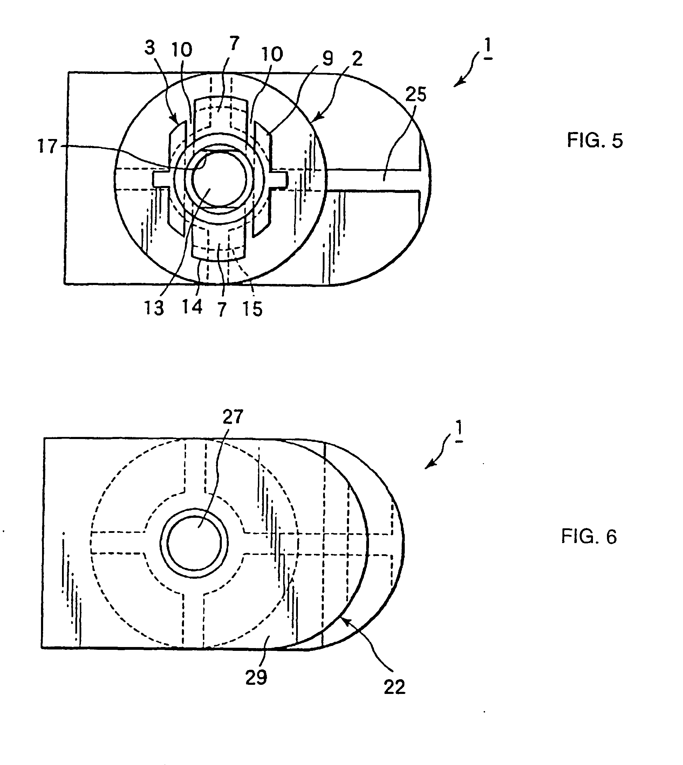

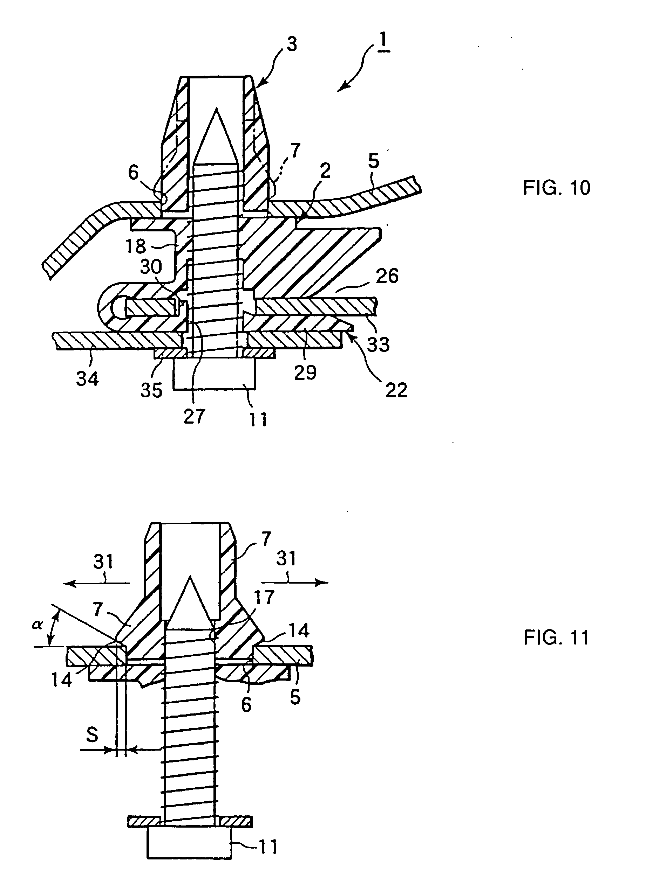

The following is an explanation of working examples of the present invention with reference to the drawings. FIG 1 through FIG 11 show the screw grommet in a working example of the present invention. The screw grommet 1 is an integrated plastic fastening tool. The screw grommet 1 is equipped with a flange 2 and a shank 3 extending from the flange 2. The shank 3 is tube-shaped for insertion into an attachment hole 6 in a workpiece 5 (FIG 10) such as a car body. A pair of anchor-shaped legs 7, 7 on the shank 3 extend from the end of the shank (the upper end of the shank 2 in FIG 1) towards the flange 2. The end of the legs 7 towards the flange 2 is the free end. It extends outward radially from the shank 3 and is flexible so as to bend inward and outward radially. The ends of the legs 7 are connected to the main section 9 of the shank 3 and the other ends are separated from the main section 9 of the shank by a U-shaped groove 10 shown in FIG 1 and FIG 2. These, too, are flexible so as to bend inward and outward radially with respect to the main section 9 of the shank.

A through-hole 13 is formed in the center of the flange 2 and the shank 3 for inserting the tapping screw 11 (FIG 10) and make the shank 3 hollow. The hollow section of the shank 3 is filled when the tapping screw 11 is screwed into the through-hole 13. This keeps the free ends of the legs 7 from bending inward radially. A locking shoulder 14 is formed on the outside section of the free ends of the legs 7 to engage the edge of the attachment hole in the workpiece. Screwing in the tapping screw 11 brings the locking shoulders 14 on the legs 7 in firm contact with the attachment hole 6 in the workpiece 5. The fixed legs 7 extending outward and the flange 2 secure the screw grommet 1 to the workpiece 5. The free ends of the legs 7 have a catching section 15 extending from the locking shoulder 14 towards the end. These come into contact with the surface of the workpiece and catch.

A threaded section 17 extending inward so the diameter of the screw through-hole 13 is smaller than the outer diameter of the tapping screw is formed on the free ends of the legs 7 (near the locking shoulder 14). Because the threaded section 17 has a diameter smaller than the outer diameter of the tapping screw, threading is formed in the inner wall when the tapping screw is screwed in. This strengthens the extension of the free ends of the legs 7 outward, strengthens the contact and connection between the edge of the attachment hole in the workpiece and the locking shoulder 14 and catching section 15 of the legs 7 on the inside wall. As a result, the screw grommet is secured more firmly to the workpiece.

A tube-shaped fastening torque bearing section 18 extending opposite the shank 7 (towards the bottom in FIG 1 and FIG 2) is integrated with the flange 2. A second through-hole 19 is formed in the fastening torque bearing section 18 with a diameter smaller than the outer diameter of the tapping screw and aligned axially with the through-hole 13 in the flange 2 and the shank 3 so as to be able to screw in the tapping screw. The fastening torque from the insertion of the tapping screw is born not by the threaded section 17 in the legs 7 but by the fastening torque bearing section 18. The fastening torque bearing section 18 is integrated with the flange 2 and secured to the flange 2. It is also integrated with the main section 9 of the shank and integrated with the main section 9 of the shank. The legs 7 are only partially integrated with the main section 9 of the shank because of the U-shaped groove 10. Therefore, they can move radially inward and outward and move circumferentially with respect to the main body 9 of the shank only by the amount of space created by the U-shaped groove 10.

A threaded section 17 is formed on the inside on the legs 7 so the fastening torque from the screw driver is applied to the legs 7 via the threaded section 17. This moves the legs 7 circumferentially by the amount of space created by the U-shaped groove 10, and the legs 7 are twisted. When the strong fastening torque from the tool is applied to the legs 7 via the threaded section 17, a strong torque is applied to the base of the legs (the end of the shank), the legs become twisted, and there is a possibility of damage. Because the latest fastening tools are strong and compact, the tapping screw is subject to strong torque and the legs are even more likely to be damaged. The fastening torque bearing section 18 connected to the flange 2 and the main section 9 of the shank keeps the strong fastening torque due to the screw driver from being concentrated in the legs 7. Therefore, the legs 7 are less likely to be damaged. Because a fastening tool with strong fastening torque can be used, components can be quickly attached using a screw grommet.

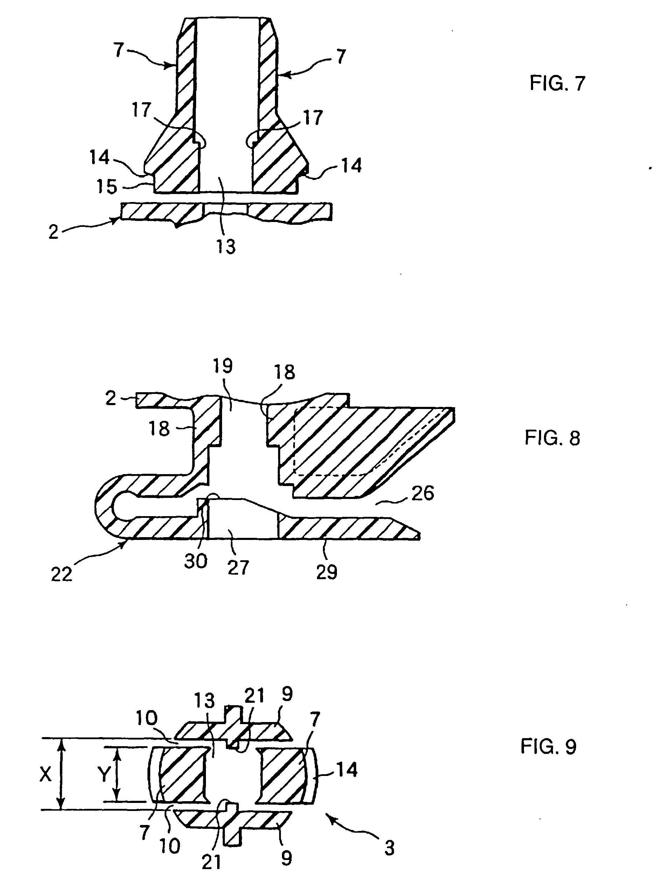

As shown in FIG 9, ribs 21 extending towards the through-hole 13 are formed inside the main section 9 of the shank separated from the legs 7 by the U-shaped groove 10 (i.e., the main section of the shank near the threaded section 17 of the legs 7). The ribs 21 extend axially with respect to the shank 3. The ribs 21 extend towards the through-hole 13 and bear some of the fastening torque when the tapping screw is screwed in. The ribs 21 are formed in opposing pairs as shown in FIG 9. The ribs 21 can also disperse the strong fastening torque applied to the legs by the screw driver.

As shown in FIG 9, the circumferential width of the U-shaped groove 10 separating the legs 7 from the main section 9 of the shank is as small as possible. In FIG 9, width X including two U-shaped grooves 10 and the circumferential width Y of the legs 7 is as close as possible to the width of the legs 7. The fastening torque twists the legs 7 circumferentially. If width X is close to width Y, however, contact with the side wall of the nearby main section 9 of the shank occurs and further twisting is prevented even when the legs 7 are twisted. Therefore, twisting of the legs due to the fastening torque from the tapping screw can be prevented if the circumferential width of the U-shaped groove is smaller.

A holding clip section 22 bent in a U shape is integrated with the fastening torque bearing section 18 and arranged nearly parallel to the plane of the flange 2 at the end of the tube-shaped fastening torque bearing section 18 opposite the flange 2 (the bottom end in FIG 1 and FIG 2). As shown in FIG 2, the U-shaped holding clip section 22 is secured firmly to the fastening torque bearing section 18 and the flange 2 by the ribs 23, 25. The holding clip section 22 provides the U-shaped section with some elasticity, and can be slipped on panel-shaped components or components on a panel to secure them. The opening section opens wide to make insertion into the U-shaped section easier. A third through-hole 27 aligned axially with the through-hole section 13 and the second through-hole section 19 to receive the tapping screw is formed in the clip section 22. The outside surface of the support plate 29 (the bottom surface in FIG 2), which is able to bend the clip section 22 elastically, is flat so other components can be supported by the tapping screw. A locking section 30 is formed on the inside of the support plate 29 to temporarily catch inserted components so they do not fall off.

The locking shoulders 14 on the anchor-shaped legs, as shown in FIG 11, are not parallel to the surface of the workpiece 6 on the locking side but rather inclined at a constant angle α. This allows workpieces of varying thicknesses to be secured firmly. In FIG 11, as the tapping screw 11 is screwed into the threaded section 17 of the legs 7, the force applied in the direction of arrow 31 towards the legs 7 is deflected away from the legs 7, and the locking shoulder 14 comes into contact with the edge of the attachment hole 6 in the workpiece 5. Because the locking shoulder 14 is inclined at angle a, it engages the attachment hole 6 in the space S shown in FIG 11 and is secured firmly to the workpiece based on its thickness.

The connection of a first attached component 33 and a second attached component 34 such as a pair of engine covers on a workpiece 5 such as a car body using the screw grommet 1 is shown in FIG 10. The shank 3 on the screw grommet 1 is inserted into the attachment hole 6 in the workpiece 5 until the flange 2 comes into contact with the workpiece 5. The first attached component 33 is inserted from the opening section 26 of the holding clip section 22, and the locking section 30 engages the attachment hole. The second attached component 34 is arranged so the attachment hole is aligned with the third through-hole 27 in the support plate 29 of the holding clip section 22. The tapping screw 11 is then passed through a washer 35 and the third through-hole 27, and then screwed into the screw grommet 1 using an air-powered tool. When the tapping screw 11 is screwed into the threaded section 17, the free end of the legs 7 is extended strongly to the outside of the locking shoulder 14 and the catching section 15, and the screw grommet 1 is secured firmly to the workpiece 5. The tapping screw 11 is screwed into the fastening torque bearing section 18, and the fastening torque from the tapping screw is born by the fastening torque bearing section. This keeps the strong fastening torque from being concentrated in the legs and decreases the likelihood of the legs being damaged. The holding clip section 22 also connects the first attached component 33 to the second attached component 34. As a result, the separate components are connected.

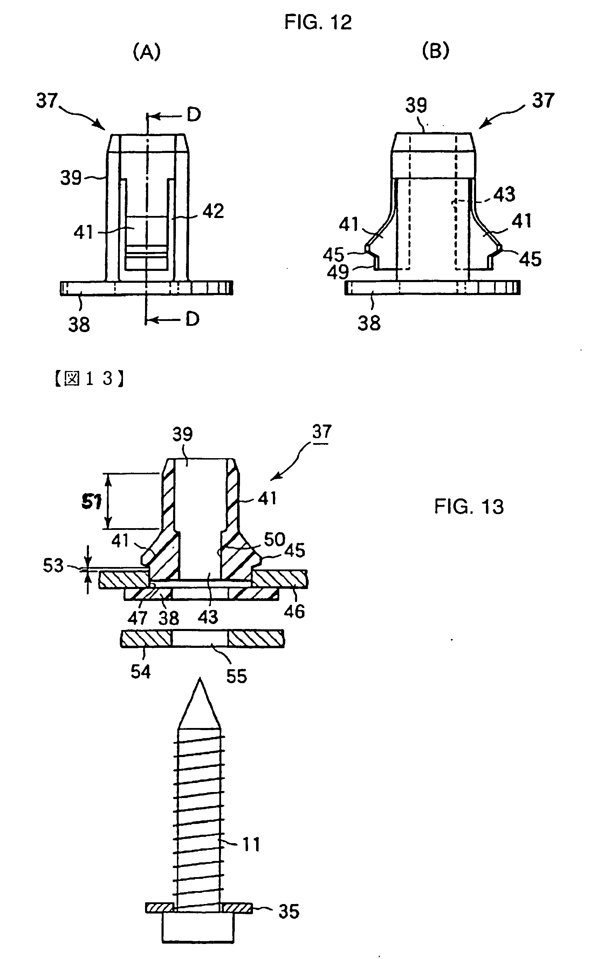

FIG 12 through FIG 14 show another screw grommet 37. The screw grommet 37 is an integrated plastic fastening tool equipped with a flange 38 and a shank 39 extending from the flange 38. The shank 39 is tube-shaped for insertion into an attachment hole 42 in a workpiece 46. A pair of anchor-shaped legs 41 on the shank 39 extend from the end of the shank (the upper end of the shank 39 in FIG 12) towards the flange 38. The end of the legs towards the flange 38 is the free end. It extends outward radially from the shank 39 and is flexible so as to bend inward and outward radially. The ends of the legs 41 are connected to the main section of the shank 39 and the other ends (the upper end in FIG 12) are separated from the main section of the shank 39 by a U-shaped groove 42 shown in FIG 12 (A). These too are flexible so as to bend inward and outward radially with respect to the main section of the shank. A through-hole 43 is formed in the center of the flange 38 and the shank 39 for inserting the tapping screw 11 (FIG 13) and make the shank 39 hollow. The hollow section of the shank 3 is filled when the tapping screw 11 is screwed into the through-hole 43. This keeps the free ends of the legs 41 from bending inward radially. A locking shoulder 45 is formed on the outside section of the free ends of the legs 41 to engage the edge of the attachment hole in the workpiece. Screwing in the tapping screw 11 brings the locking shoulders 45 on the legs 41 in firm contact with the attachment hole 47 in the workpiece 45. The fixed legs 41 extending outward and the flange 38 secure the screw grommet 37 to the workpiece 47. The free ends of the legs 41 have a catching section 49 extending from the locking shoulder 45 towards the end. These come into contact with the surface of the workpiece and catch.

A threaded section 50 extending inward so the diameter of the screw through-hole 43 is smaller than the outer diameter of the tapping screw is formed on the free ends of the legs 41 (near the locking shoulder 45). Because the threaded section 50 has a diameter smaller than the outer diameter of the tapping screw, threading is formed in the inner wall when the tapping screw is screwed in. This strengthens the extension of the free ends of the legs 41 outward, strengthens the contact and connection between the edge of the attachment hole in the workpiece and the locking shoulder 45 and catching section 49 of the legs 41 on the inside wall. As a result, the screw grommet is secured more firmly to the workpiece.

The locking shoulders 45 on the anchor-shaped legs are not parallel to the surface of the workpiece 47 on the locking side but rather inclined at a constant angle. This allows workpieces of varying thicknesses to be secured firmly. As the tapping screw 11 is screwed into the threaded section 50 of the legs 41, the force applied outside radially is deflected away from the legs 41, and the locking shoulder 45 comes into contact with the edge of the attachment hole 47 in the workpiece 46. Because the locking shoulder 45 is inclined at an angle, it is secured firmly to the workpiece based on its thickness.

As shown in FIG 13, the sections 51 of the legs 41 other than the threaded section 50 are thin and extendable so as to draw the free end closer to the flange 38 when the tapping screw 11 is screwed in and fastened. As a result, the legs 41 are raised to the surface of the workpiece 46 and the grommet is secured more firmly. In FIG 13, the thin sections 51 are extended by the screwing in of the tapping screw 11 only by an amount equal to the space 53 between the workpiece 46 and the locking shoulder 45. The space 53 is closed, the legs 41 are raised to the surface of the workpiece 46, and the grommet is secured more firmly.

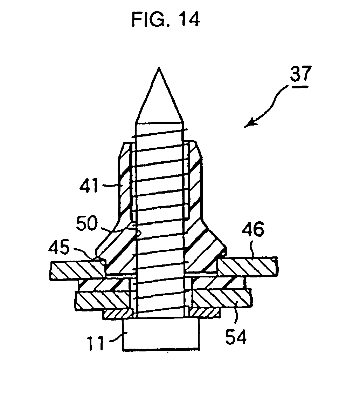

The connection of an attached component 54 to a workpiece 46 such as a car body using the screw grommet 37 will now be explained. The configuration before the connection is shown in FIG 13 and the configuration after the connection is shown in FIG 14. The shank 39 on the screw grommet 37 is inserted into the attachment hole 47 in the workpiece 46 until the flange 38 comes into contact with the workpiece 46. The attached component 54 is arranged so it engages the through-hole 43 in the flange 38. The tapping screw 11 is then passed through a washer 35 and attachment hole 55 in the workpiece 54, and then screwed into the screw grommet 37 using an air-powered tool. When the tapping screw 11 is screwed into the threaded section 50, the free end of the legs 41 is extended strongly to the outside of the locking shoulder 45 and the catching section 49, and the screw grommet 37 is secured firmly to the workpiece 46. The attached component 54 is then secured firmly to the workpiece 46. In FIG 13, the thin sections 51 are extended by the screwing in of the tapping screw 11 only by an amount equal to the space 53 between the workpiece 46 and the locking shoulder 45. The space 53 is closed, the legs 41 are raised to the surface of the workpiece 46, and the grommet is secured more firmly as shown in FIG 14.

Because the screw grommet has a threaded section on the inside of the free ends of the legs with a diameter greater than the outer diameter of the tapping screw in the screw grommet of the present invention, the free ends of the legs expand outward strongly and the screw grommet is secured to the workpiece firmly. Because a threaded through-hole with a diameter smaller than the tapping screw is formed in the fastening torque bearing section, and the fastening torque from screwing in the tapping screw is born by the fastening torque bearing section outside the threaded section of the legs, strong fastening torque is not concentrated in the legs and the legs are less likely to be damaged. As a result, a fastening tool with high fastening torque can be used and the screw grommet can be used to quickly attach a component.

In another screw grommet of the present invention, a threaded section is formed on the inside section of the free end of the legs for receiving the tapping screw and extending towards the inside so the diameter of the threaded through-hole becomes smaller than the outer diameter of the tapping screw, and the sections of the legs other than the threaded section are thin and extendable so as to draw the free end closer to the flange when the tapping screw is screwed in and fastened. As a result, the legs are raised towards the surface of the workpiece and more firmly secured when the tapping screw is screwed in and fastened.

## Claims

1. A screw grommet (1) for securing workpieces with a threaded fastener, the screw grommet (1) comprising:
a tubular body having a first end and a second end; and
a flange (2) radially extending from said tubular body, wherein said tubular body includes a shank section (3) extending from said flange (2) toward said first end, said shank section including flexible legs (7) having a free end positioned proximate to said flange (2), said shank section (3) including a pair of substantially parallel, spaced apart, walls (9) axially extending along the sides of said flexible legs (7), said flexible legs (7) being moveable relative to and positioned between said walls (9), wherein said walls (9) limit the amount said flexible legs (7) may circumferentially twist during insertion of the threaded fastener, **characterized in that**
said flange (2) is positioned between said first and second ends, and said tubular body includes a torque bearing section (18) extending from said flange toward said second end, said torque bearing section (18) including a first threadable aperture (19) having a size smaller than the outside diameter of the threaded fastener (11), and said shank section (3) further including a second threadable aperture (17) formed on an inner surface of said free end of said legs (7), said second threadable aperture (17) having a size smaller than the outside diameter of the threaded fastener and being formed at least in part by opposed flat parallel walls.

2. The screw grommet of claim 1 wherein said torque bearing section (18) includes an aperture being aligned with said first threadable aperture (19) and having a size greater than the outside diameter of the threaded fastener (11).

3. The screw grommet of claim 2 wherein said shank section (3) includes a first portion including said second threadable aperture (17) and a second portion including an aperture having a size greater than the outside diameter of the threaded fastener (11).

4. The screw grommet of claim 3 wherein said shank section (3) includes said sidewalls (9) adjacent said flexible legs (7), each of said sidewalls (9) including an axially extending rib (21) formed in said first portion, said ribs (21) being spaced apart a distance less than the outer diameter of the threaded fastener (11).

5. The screw grommet of claim 1 further including a clip section (22) extending from said flange (2), said clip section (22) including a cantilevered flexible tang (29) having an aperture (27) extending therethrough, said aperture (27) being aligned with said first threadable aperture (19).

6. The screw grommet of claim 5 wherein said clip section (22) includes a locking tab (30) extending from said flexible tang (29), said locking tab (30) adapted to selectively engage the workpiece within an aperture extending therethrough.

7. The screw grommet of claim 6 wherein said aperture (27) of said flexible tang (29) extends through said locking tab (30).

8. The screw grommet of claim 1 wherein each of said flexible legs (7) includes a radially extending protrusion (14) positioned to biasedly engage the workpiece during installation.

9. A method of coupling a first workpiece having a first aperture to a second workpiece having a second aperture with a threaded fastener and a screw grommet according to claims 1-8, the screw grommet (1) including a tubular body having a flange (2) radially extending from said tubular body, a shank section (3) extending from said flange (2) said shank section (3) including flexible legs (7) having a free end positioned proximate to said flange (2), **characterized in that** said tubular body includes a torque bearing section (18) positioned on the opposite side of the flange (2) as the shank section (3), the shank section (3) and the torque bearing section (18) each including a bore (13) having sections (17, 19) of a size less than the outer diameter of the threaded fastener, the method comprising the steps of:
inserting the shank section (3) through the first aperture of the first workpiece;
engaging the flange (2) with the first workpiece;
aligning the second aperture of the second workpiece with the bore extending through the torque bearing section (18);
positioning the threaded fastener within the second aperture;
rotating the threaded fastener to form threads in the bore of the torque bearing section;
continuing to rotate the threaded fastener to axially translate it into contact with the bore of the shank section (3);
continuing to rotate the threaded fastener to form threads on the flexible legs (7);
biasedly engaging the flexible legs (7) with the first aperture of the first workpiece; and
continuing to rotate the threaded fastener to clamp the second workpiece to the screw grommet (1).

10. The method of claim 9 where the majority of the fastener load is reacted by the torque bearing section (18).

11. The method of claim 10 further including snap-fitting a locking tab (30) extending from a flexible tang (29) of a clip section (22) of the screw grommet (1) within the second aperture of the second workpiece.

12. The method of claim 9 further including positioning the threaded fastener within an aperture of the torque bearing (18) section having a diameter greater than the outside diameter of the threaded fastener prior to axially passing by the flange (2).

## Patentansprüche

1. Schraubtülle (1) zum Befestigen von Werkstücken mit einem Gewindebefestigungselement, wobei die Schraubtülle (1) umfasst:
einen rohrförmigen Körper mit einem ersten Ende und einem zweiten Ende und einen sich radial von dem rohrförmigen Körper erstreckenden Flansch (2), wobei der rohrförmige Körper einen Schaftabschnitt (3) umfasst, der sich von dem Flansch (2) zum ersten Ende erstreckt, wobei der Schaftabschnitt biegsame Beine (7) umfasst, mit einem freien Ende, das nahe dem Flansch (2) angeordnet ist, wobei der Schaftabschnitt (3) ein Paar im Wesentlichen parallele, in einem Abstand voneinander angeordnete Wände (9) umfasst, die sich axial entlang den Seiten der biegsamen Beine (7) erstrecken, wobei die biegsamen Beine (7) relativ zu den Wänden (9) beweglich sind und zwischen ihnen angeordnet sind, wobei die Wände (9) das Ausmaß begrenzen, um das sich die biegsamen Beine (7) während des Einführens des Gewindebefestigungselements in Umfangsrichtung verdrehen können, **dadurch gekennzeichnet, dass**
der Flansch (2) zwischen dem ersten und dem zweiten Ende angeordnet ist und der rohrförmige Körper einen Drehmoment aufnehmenden Abschnitt (18) umfasst, der sich vom Flansch in Richtung des zweiten Endes erstreckt, wobei der Drehmoment aufnehmende Abschnitt (18) eine erste mit Gewinde versehbare Öffnung (19) umfasst, mit einer Abmessung, die kleiner ist als der Außendurchmesser des Gewindebefestigungselements (11) und dass der Schaftabschnitt (3) weiter eine zweite mit Gewinde versehbare Öffnung (17) umfasst, die an einer Innenseite des freien Endes der Beine (7) gebildet ist, wobei die zweite mit Gewinde versehbare Öffnung (17) eine kleinere Abmessunghat als der Außendurchmesser des Gewindebefestigungselements und zumindest teilweise von gegenüberliegenden ebenen parallelen Wänden gebildet wird.

2. Schraubtülle nach Anspruch 1, wobei der Drehmoment aufnehmende Abschnitt (18) eine Öffnung umfasst, die mit der ersten mit Gewinde versehbaren Öffnung (19) fluchtet und eine größere Abmessung hat als der Außendurchmesser des Gewindebefestigungselements (11).

3. Schraubtülle nach Anspruch 2, wobei der Schaftabschnitt (3) einen ersten Abschnitt umfasst, der die zweite mit Gewinde versehbare Öffnung umfasst und einen zweiten Abschnitt, der eine Öffnung mit einer größeren Abmessung als der Außendurchmesser des Gewindebefestigungselements (11) umfasst.

4. Schraubtülle nach Anspruch 3, wobei der Schaftabschnitt (3) die an die biegsamen Beine (7) angrenzenden Seitenwände (9) umfasst, wobei jede der Seitenwände (9) eine in dem ersten Abschnitt gebildete, sich axial erstreckende Rippe (21) umfasst, wobei die Rippen (21) in einem Abstand voneinander angeordnet sind, der kleiner ist als der Außendurchmesser des Gewindebefestigungselements (11).

5. Schraubtülle nach Anspruch 1, weiter umfassend einen Clip-Abschnitt (22), der sich vom Flansch (2) erstreckt, wobei der Clip-Abschnitt (22) eine kragende biegsame Lasche (29) mit einer sich durch sie erstreckenden Öffnung (27) umfasst, wobei die Öffnung (27) mit der ersten mit Gewinde versehbaren Öffnung (19) fluchtet.

6. Schraubtülle nach Anspruch 5, wobei der Clip-Abschnitt (22) eine Schließnase (30) umfasst, die sich von der biegsamen Lasche (29) erstreckt, wobei die Schließnase (30) dazu angepasst ist, an dem Werkstück gezielt in einer sich durch dieses erstreckenden Öffnung einzugreifen.

7. Schraubtülle nach Anspruch 6, wobei sich die Öffnung (27) der biegsamen Lasche (29) durch die Schließnase (30) erstreckt.

8. Schraubtülle nach Anspruch 1, wobei jedes der biegsamen Beine (7) einen sich radial erstreckenden Vorsprung (14) umfasst, der dazu angeordnet ist, um während des Einbaus vorgespannt am Werkstück einzugreifen.

9. Verfahren zum Verbinden eines ersten eine erste Öffnung aufweisenden Werkstücks an ein zweites eine zweiten Öffnung aufweisendes Werkstück mit einem Gewindebefestigungselement und einer Schraubtülle nach den Ansprüchen 1-8, wobei die Schraubtülle (1) einen rohrförmigen Körper mit einem Flansch (2), der sich radial von dem rohrförmigen Körper erstreckt umfasst, wobei sich ein Schaftabschnitt (3) von dem Flansch (2) erstreckt, wobei der Schaftabschnitt (3) biegsame Beine (7) mit einem freien Ende umfasst, das nahe dem Flansch (2) angeordnet ist, **dadurch gekennzeichnet, dass** der rohrförmige Körper einen Drehmoment aufnehmenden Abschnitt (18) umfasst, der wie der Schaftabschnitt (3) auf der gegenüberliegenden Seite des Flanschs (2) angeordnet ist, wobei der Schaftabschnitt (3) und der Drehmoment aufnehmende Abschnitt (18) jeweils eine Bohrung (13) mit Abschnitten (17, 19) aufweisen, deren Abmessung kleiner ist als der Außendurchmesser des Gewindebefestigungselements, wobei das Verfahren folgende Schritte umfasst:
Einführen des Schaftabschnitts (3) durch die erste Öffnung des ersten Werkstücks;
Eingreifen des Flanschs (2) am ersten Werkstück;
Fluchten der zweiten Öffnung des zweiten Werkstücks mit der Bohrung, die sich durch den Drehmoment aufnehmenden Abschnitt (18) erstreckt;
Anordnen des Gewindebefestigungselements in der zweiten Öffnung;
Drehen des Gewindebefestigungselements, um Gewinde in der Bohrung des Drehmoment aufnehmenden Abschnitts zu bilden;
Weiterdrehen des Gewindebefestigungselements zum axialen Verschieben, um es mit der Bohrung des Schaftabschnitts (3) in Berührung zu bringen;
Weiterdrehen des Gewindebefestigungselements, um Gewinde an den biegsamen Beinen (7) auszubilden;
vorgespanntes Eingreifen der biegsamen Beine (7) in der ersten Öffnung des ersten Werkstücks; und
Weiterdrehen des Gewindebefestigungselements, um das zweite Werkstück an die Schraubtülle (1) zu klemmen.

10. Verfahren nach Anspruch 9, wobei dem Großteil der Befestigungselementlast von dem Drehmoment aufnehmenden Abschnitt (18) entgegengewirkt wird.

11. Verfahren nach Anspruch 10, weiter umfassend das Einschnappen einer Schließnase (30), die sich von einer biegsamen Lasche (29) eines Clip-Abschnitts (22) der Schraubtülle (1) erstreckt, in die zweite Öffnung des zweiten Werkstücks.

12. Verfahren nach Anspruch 9, weiter umfassend das Anordnen des Gewindebefestigungselements in einer Öffnung des Drehmoment aufnehmenden Abschnitts (18) mit einem Durchmesser, der größer ist als der Außendurchmesser des Gewindebefestigungselements, bevor es axial am Flansch (2) vorbeibewegt wird.

## Revendications

1. Rondelle à vis (1) destinée à fixer des pièces à travailler au moyen d'une attache filetée, la rondelle à vis (1) comprenant :
un corps tubulaire comportant une première extrémité et une seconde extrémité ; et
une bride (2) s'étendant radialement à partir dudit corps tubulaire, ledit corps tubulaire comprenant une section de tige (3) s'étendant à partir de ladite bride (2) vers ladite première extrémité, ladite section de tige comprenant des branches flexibles (7) présentant une extrémité libre positionnée à proximité de ladite bride (2), ladite section de tige (3) comprenant une paire de parois (9) sensiblement parallèles et mutuellement distantes, s'étendant axialement le long des côtés desdites branches flexibles (7), lesdites branches flexibles (7) étant aptes à se déplacer par rapport auxdites parois (9) et positionnées entre celles-ci, lesdites parois (9) limitant la possibilité de torsion circonférentielle desdites branches flexibles (7) au cours de l'insertion de l'attache filetée, **caractérisée en ce que**
ladite bride (2) est positionnée entre lesdites première et seconde extrémités, et ledit corps tubulaire comporte une section de portée de couple (18) s'étendant à partir de ladite bride vers ladite seconde extrémité, ladite section de portée du couple (18) comprenant un premier orifice taraudable (19) plus petit que le diamètre extérieur de l'attache filetée (11), et ladite section de tige (3) comprenant, en outre, un second orifice taraudable (17) formé sur une surface intérieure de ladite extrémité libre desdites branches (7), ledit second orifice taraudable (17) étant plus petit que le diamètre extérieur de l'attache filetée et étant formée au moins en partie par des parois parallèles planes opposées.

2. Rondelle à vis selon la revendication 1, dans laquelle ladite section de portée du couple (18) comporte un orifice aligné avec ledit premier orifice taraudable (19) et présentant une taille plus grande que le diamètre extérieur de l'attache filetée (11).

3. Rondelle à vis selon la revendication 2, dans laquelle ladite section de tige (3) comprend une première portion comportant ledit second orifice taraudable (17) et une seconde portion comportant un orifice plus grand que le diamètre extérieur de l'attache filetée (11).

4. Rondelle à vis selon la revendication 3, dans laquelle ladite section de tige (3) comporte lesdites parois latérales (9) adjacentes auxdites branches flexibles (7), chacune desdites parois latérales (9) comportant une nervure (21) s'étendant radialement, formée dans ladite première portion, lesdites nervures (21) étant espacées d'une distance inférieure au diamètre extérieur de l'attache filetée (11).

5. Rondelle à vis selon la revendication 1 comprenant, en outre, une section de clip (22) s'étendant à partir de ladite bride (2), ladite section de clip (22) comprenant une languette flexible (29) en porte-à-faux traversée par un orifice (27), ledit orifice (27) étant aligné avec ledit premier orifice taraudable (19).

6. Rondelle à vis selon la revendication 5, dans laquelle ladite section de clip (22) comprend une patte de verrouillage (30) s'étendant à partir de ladite languette flexible (29), ladite patte de verrouillage (30) étant conçue pour engager sélectivement la pièce à travailler à l'intérieur d'un orifice ménagé au travers de celle-ci.

7. Rondelle à vis selon la revendication 6, dans laquelle ledit orifice (27) de ladite languette flexible (29) s'étend à travers ladite patte de verrouillage (30).

8. Rondelle à vis selon la revendication 1, dans laquelle chacune desdites branches flexibles (7) comprend une saillie (14) s'étendant radialement, positionnée pour s'engager avec précontrainte dans la pièce à travailler pendant l'installation.

9. Procédé pour raccorder une première pièce à travailler comportant un premier orifice à une seconde pièce à travailler comportant un second orifice au moyen d'une attache filetée et d'une rondelle à vis selon les revendications 1 à 8, la rondelle à vis (1) comprenant un corps tubulaire muni d'une bride (2) s'étendant radialement à partir dudit corps tubulaire, une section de tige (3) s'étendant à partir de ladite bride (2), ladite section de tige (3) comprenant des branches flexibles (7) présentant une extrémité libre positionnée à proximité de ladite bride (2), **caractérisé en ce que** ledit corps tubulaire comprend une section de portée de couple (18) positionnée du côté de la bride (2) opposé à la section de tige (3), la section de tige (3) et la section de portée de couple (18) comportant chacune un alésage (13) comportant des sections (17, 19) de dimensions plus petites que le diamètre extérieur de l'attache filetée, le procédé comportant les étapes suivantes :
insérer la section de tige (3) à travers le premier orifice de la première pièce à travailler ;
engager la bride (2) dans la première pièce à travailler ;
aligner le second orifice de la seconde pièce à travailler avec l'alésage s'étendant à travers la section de portée du couple (18) ;
positionner l'attache filetée dans le second orifice ;
faire tourner l'attache filetée pour former des filetages dans l'alésage de la section de portée du couple ;
continuer de faire tourner l'attache filetée afin de l'amener en contact axialement avec l'alésage de la section de tige (3) ;
continuer de faire tourner l'attache filetée pour former des filetages sur les branches flexibles (7) ;
engager les branches flexibles (7) avec précontrainte dans le premier orifice de la première pièce à travailler ; et
continuer de faire tourner l'attache filetée pour fixer la seconde pièce à travailler à la rondelle à vis (1).

10. Procédé selon la revendication 9 dans lequel la majeure partie de la charge de l'attache est absorbée par la section de portée du couple (18).

11. Procédé selon la revendication 10 comportant, en outre, montée par encliquetage une patte de verrouillage (30) s'étendant à partir d'une languette flexible (29) d'une section de clip (22) de la rondelle à vis (1) à l'intérieur du second orifice de la seconde pièce à travailler.

12. Procédé selon la revendication 9 consistant, en outre, à positionner l'attache filetée à l'intérieur d'un orifice de la section de portée du couple (18) dont le diamètre est plus grand que le diamètre extérieur de l'attache filetée avant de franchir axialement la bride (2).
